# EUROPÄISCHE PATENTSCHRIFT

(11) **EP 0 959 344 B1**
(45) Veröffentlichungstag und Bekanntmachung des Hinweises auf die Patenterteilung: **17.11.2004**
(21) Anmeldenummer: 98109175.4
(22) Anmeldetag: 20.05.1998
(51) Int. Cl.: G01N 23/04

(54) **Verfahren und Baugruppe zur Durchführung von Durchstrahlungsprüfungen an Werkstoffeinheiten**
Method and assembly for carrying out irradiation tests on units
Méthode et assemblage pour la réalisation de tests par irradiation sur des pièces

(43) Veröffentlichungstag der Anmeldung: 24.11.1999
(73) Patentinhaber: compra GmbH Inspektionsgesellschaft für Qualitätssicherung & Rückbau, 50226 Frechen (DE)
(72) Erfinder: Müller, Jürgen, 52477 Alsdorf (DE); Ewert, Uwe Dr.rer.nat., 10437 Berlin (DE); Redmer, Bernhard Dipl.-Ing., 12619 Berlin (DE)
(74) Vertreter: Stenger, Watzke & Ring Patentanwälte

(56) Entgegenhaltungen:
- US-A- 4 437 006
- US-A- 4 725 963
- US-A- 4 969 110
- US-A- 5 119 408
- US-A- 5 608 660
- US-A- 5 698 854

## Beschreibung

Die Erfindung betrifft ein Verfahren zur Durchführung von Durchstrahlungsprüfungen an Werkstücken zur Bestimmung von Form und Tiefenlage von Materialinhomogenitäten. Darüber hinaus betrifft die Erfindung eine Vorrichtung zur Durchführung des Verfahrens. Ein erfindungswesentlicher Anwendungsbereich des erfindungsgemäßen Verfahrens und der erfindungsgemäßen Vorrichtung ist die Prüfung von Schweißnähten. Insbesondere ist ein erfindungswesentlicher Anwendungsbereich die Prüfung von Rundschweißnähten an Rohrleitungen.

Mit zerstörungsfreien Prüfverfahren werden technische Anlagen, Komponenten, Bauwerke, Verkehrsmittel und so weiter während der Fertigung sowie im Betrieb auf Fehler untersucht, die zum Versagen der Teile oder der Anlagen führen können. Diese Prüfverfahren werden stets mit dem Ziel einer erhöhten Fehlernachweisempfindlichkeit und Zuverlässigkeit der Aussage weiterentwickelt. Zerstörungsfreie Prüfverfahren umfassen Oberflächenprüfungen wie Farbeindringprüfungen, Magnetpulverprüfungen und dergleichen, sowie Volumenprüfungen wie Ultraschallprüfungen und Durchstrahlungsprüfungen, wobei zur Durchstrahlung Isotope oder Röntgenstrahler verwendet werden.

Ein besonderes Problem ist die Auffindung von Rissen in Schweißnähten, insbesondere an Rundschweißnähten von Rohrleitungen. Beispielsweise müssen Rohrleitungen von Kraftwerken regelmäßig auf Funktionsfähigkeit überprüft werden. In den Schweißnähten können sich Materialinhomogenitäten, beispielsweise Risse, bilden, die zerstörungsfrei geprüft werden müssen. Ein gängiges Verfahren ist die Durchstrahlungsprüfung. Auf einer Seite der zu prüfenden Schweißnaht oder des zu prüfenden Rohres wird eine Strahlenquelle angeordnet, gegenüberliegend Filmmaterial. Durch auftretende Streustrahlung wird die Qualität der Durchstrahlungsaufnahme verschlechtert und Aussagen erschwert. Auch können keine Risse ermittelt werden, wenn diese in Bezug auf die Durchstrahlungsrichtung falsch liegen. Ganz besonders wird die Streustrahlung durch die in den Rohren befindlichen Medien verstärkt, so daß überlicherweise ganze Anlagen stillgelegt werden müssen, um die Rohre für eine Prüfung entleeren zu können.

Ultraschall-, Wirbelstrom-, Farbeindring-, Magnetpulver- oder Durchstrahlungsprüfungen führen noch immer zu unbefriedigenden Ergebnissen, zu langen Prüfzeiten und einer geringen Trefferquote. Der universellen Anwendung der Durchstrahlungsprüfung steht die ungenügende Filterung der nichtbildzeichnenden Streustrahlung im Wege, was insbesondere für gefüllte oder dickwandige Rohrleitungen gilt.

Es sind diverse Blendensysteme zur Streustrahlreduktion während der Aufnahme bekannt. Hier werden entweder stationäre oder bewegliche Systeme eingesetzt, die es gestatten, Strahlen auszublenden, deren Richtung von der kürzesten Verbindung Strahlenquelle/Detektor abweicht. Es wurden auch Versuche mit medizinischen Tomographie-Scannern durchgeführt, die jedoch einen praktischen Einsatz nicht realisierbar machen.

Die klassische manuelle Durchstrahlungsprüfung hat darüber hinaus den Nachteil, daß die Einstrahlrichtung definiert zu flächigen Inhomogenitäten erfolgen muß. Wird die Einstrahlrichtung nicht optimal eingestellt, kann eine flächige Inhomogenität, beispielsweise ein Riß, übersehen werden. Diese Einschränkungen der Nachweisempfindlichkeit können bei industriellen Anlagen, insbesondere in Chemieanlagen, Kraftwerken und dergleichen, zu schweren Folgen führen.

So zeigt die Druckschrift US 4,437,006 ein Verfahren sowie eine Vorrichtung zum Bestimmen der Intensität der durch ein Objekt durchdringenden Röntgenstrahlung. Dazu werden drei Strahlungsquellen mit dazwischen positionierten Detektoren symmetrisch um den Prüfling angeordnet. Ein mechanischer Kontakt zum Prüfling besteht nicht. Als Röntgenquelle werden radioaktive Isotope verwendet.

Ferner beschreibt die US 4,725,963 ein Verfahren und eine Vorrichtung zur zerstörungsfreien, nicht kontaktierenden Prüfung von mechanischen Elementen wie Rohren, wobei von drei Röntgenquellen Strahlung ausgesendet wird, die von entsprechenden Diskriminatoren detektiert wird. Aus den hierdurch gewonnenen Signalen wird rechnerisch der Aufbau des Elements ermittelt. Eine derartige Vorrichtung ist zur ortsfesten Anordnung in einer Produktionsstelle von kontinuierlicher gestellten Elementen wie Röhren vorgesehen.

Ein weiteres Verfahren sowie eine Vorrichtung zur Ausführung dieses Verfahrens wird durch die US 5,119,408 offenbart, wobei die Vorrichtung zum Prüfen von mechanischen Elementen ortsfest angeordnet ist. Diese weist eine Röntgenröhre auf, die Strahlung aussendet, wobei die Strahlung ein rotierendes Element durchdringt und von Detektoren detektiert wird. Die erhaltenen Signale werden tomographisch aufgearbeitet.

Eine weitere Druckschrift US 4,969,110 beschreibt ein Verfahren zur genauen Bestimmung von Abmessungen und Fehlern eines Objekts. Dazu wird das Objekt zwischen einer Röntgenstrahlenquelle und einem entsprechenden Detektor angeordnet. Eine separate Kalibriereinheit dient zur Kalibrierung des Meßaufbaus.

Weiterhin offenbart die US 5,698,854 ein Verfahren und eine Vorrichtung zum Kontrollieren der Wanddicke entlang der Längsrichtung einer Röhre. Dazu ist die Vorrichtung auf der Röhre verfahrbar angeordnet und weist an einer Seite eine Strahlenquelle mit einem radioaktiven Isotop und gegenüberliegend ein quer zur Längsachse der Röhre ausgerichtetes Detektionsarray auf. Diese sind über das Gehäuse starr miteinander verbunden. Die Röhre ist zwischen Sender und Detektor angeordnet. Diese Lösung ist ungeeignet für eine tomographische Rekonstruktion, da keine Manipulationsvorrichtung zur Rotation des Systems um die Rohrleitung vorgesehen ist. Der Rollenmanipulator gestattet kein exaktes, wiederholendes Anfahren der Ausgangsposition für Mehrwinkelverfahren.

Ferner beschreibt die US 5,608,660 ein Verfahren und eine Vorrichtung zum Kontrollieren von Röhren bei ihrer Herstellung. Die Vorrichtung enthält eine Vielzahl von Röntgenstrahlungsquellen und geeigneten Detektoren. Die von den Detektoren gelieferten Signale werden rechnerisch verarbeitet, um in Echtzeit die Röhren in ihren dreidimensionalen Abmessungen und hinsichtlich Fehler zu überprüfen.

Ausgehend von diesem Stand der Technik liegt der vorliegenden Erfindung die **Aufgabe** zugrunde, ein Verfahren und eine Vorrichtung bereitzustellen, welche im Anlagenbereich einsetzbar sind und eine verbesserte Bestimmung von Form und Tiefenlage von Materialinhomogenitäten ermöglichen. Insbesondere sollen auch Schweißnähte an Rohrleitungen auf wirtschaftliche und einfache Weise prüfbar sein. Darüber hinaus soll eine Prüfung von Schweißnähten an mit Medium gefüllten Rohrleitungen ermöglicht werden.

Zur technischen **Lösung** dieser Aufgabe wird verfahrensseitig vorgeschlagen ein Verfahren mit den Merkmalen des Patentanspruchs 1. Die Signale werden rechnergestützt in vorgegebenen Zeitintervallen in Grau- beziehungsweise Farbdichtwerte zur Bildung von Strahlungsdichteprofilen umgewandelt und rechnergestützt aus den Strahlungsdichteprofilen Bilder berechnet, wobei unter Berücksichtigung der jeweiligen Abstände und Winkel von digitaler Kamera und Strahlenquelle eine Schichtrekonstruktion erfolgt.

Es wird ferner vorrichtungsseitig eine Vorrichtung zur Durchführung eines Verfahrens zur Durchführung einer Durchstrahlungsprüfung an Werkstoffelementen zur Bestimmung von Form und Lage von Materialinhomogenitäten gemäß dem erfindungsgemäßen Verfahren vorgeschlagen, welche eine Strahlungsquelle, eine digitale Kamera und eine mobil am zu prüfenden Werkstück montierbare Schienenbaugruppe mit entlang der Schienenbaugruppe verfahrbaren Trägereinheiten für eine Strahlenquelle und eine digitale Kamera, mit Manipulatoren für Abstand und Winkel und wenigstens einer Rechnereinheit zur Steuerung der Trägereinheiten und der Manipulatoren und zur Umwandlung der von der digitalen Kamera aufgrund der empfangenen Strahlung erzeugten elektrischen Signale in grau- bzw. farbdichte Werte zur Bildung von Strahlungsdichteprofilen und zur rechnergestützten Berechnung von Bildern aus den Strahlungsdichteprofilen.

Ferner wird vorgeschlagen, daß eine dreidimensionale Rekonstruktion aus den Strahlungsdichteprofilen unter Berücksichtigung der jeweiligen Abstände und Winkel von digitaler Kamera und Strahlenquelle erfolgt.

Für die Durchstrahlungsprüfung wird eine Strahlenquelle, insbesondere eine Röntgenröhre oder ein Gamma-Strahler verwendet. Im zu prüfenden Bereich wird eine mobile Baugruppe angeordnet, die es ermöglicht, auf einer Seite des zu prüfenden Bereiches die Strahlenquelle und auf der gegenüberliegenden Seite eine digitale Kamera anzuordnen. Die digitale Kamera ist insbesondere als Zeilenkamera ausgebildet und weist eine oder mehrere Zeilen von mindestens 1.100 parallelen Sensoren auf. In erfindungsgemäßer Weise wird eine Photodioden-Zeilenkamera verwendet, die über 2.048 Pixel verfügt. Bei Verwendung einer derartigen Zeilenkamera ist die Streustrahlung bereits weitestgehend durch Einsatz eines Blendensystems reduziert. Gemäß einem erfindungsgemäßen Vorschlag werden die Strahlen der Zeilenkamera über ein Blendensystem zugeführt. Hier eignen sich besonders Kollimatoren. Unter Verwendung eines Lumineszenzschirmes werden die einfallenden Röntgenquanten in Lichtquanten umgewandelt. Bei Verwendung dünner Schirme kann bei optimaler Einstrahlung ein Riß im Mikrometerbereich erfaßt werden. Weitere Filter, Projektoren, Linsen, Taper und dergleichen, ob physikalisch oder digital, können erfindungsgemäß eingesetzt werden. Die im Anlagenbereich mobil einsetzbare Baugruppe kann im zu prüfenden Bereich montiert werden. Die Strahlenquelle und die Kamera werden durch die Baugruppe relativ zueinander in einer exakt definierten Position positioniert und entlang des zu prüfenden Bereiches verfahren. Darüber hinaus können Abstand und relative Winkellage von Strahlenquelle und digitaler Kamera rechnergestützt eingestellt werden. Bei der Prüfung eines Rohres wird das durch die erfindungsgemäße Baugruppe möglich, Strahlenquelle und Kamera in vorgegebenen Abständen und Winkellagen über die vollen 360° um das Rohr herumzuführen, und so die gesamte Schweißnaht in im Vergleich zu herkömmlichen Prüfverfahren kurzer Zeit mit höherer Auffindwahrscheinlichkeit zu prüfen. Aus den von der digitalen Kamera erzeugten elektrischen Signale werden rechnergestützt in vorgegebenen Zeitintervallen Strahlungsdichteprofile durch Umwandlung der Signale in Grau-/Farbdichtewerte gebildet und rechnergestützt aus den Strahlungsdichteprofilen Bilder berechnet. Unter Berücksichtigung des jeweiligen Abstandes und Winkels von Strahlenquelle zu digitaler Kamera wird eine Schichtrekonstruktion durchgeführt, die eine Erfassung von Inhomogenitäten hinsichtlich Lage und Form ermöglicht.

Die Baugruppe umfaßt in erfindungsgemäßer Weise eine mobile Manipulationseinheit mit Trägereinheiten für die Strahlenquelle und die Kamera. Die Trägereinheiten sind entlang der Manipulationseinheit rechnergestützt verfahrbar angeordnet, wozu beispielsweise ansteuerbare Schrittmotoren verwendet werden. An den Trägereinheiten sind die Strahlenquelle und die Kamera mittels Manipulatoren angeordnet. Die Manipulatoren machen eine exakte Positionierung der Strahlenquelle und der Kamera hinsichtlich Abstand, Lage, Winkel und dergleichen möglich. Bei der Anwendung der Erfindung auf die Prüfung von Schweißnähten bei Rohren wird das System aus einem Rotationsmanipulator und wenigstens einem Längsmanipulator parallel zur Rohrachse gebildet. Darüber hinaus sind vorzugsweise zwei Längsmanipulatoren parallel zur Rohrachse vorteilhaft. Kamera und Strahlenquelle werden synchron und parallel zur Meßwerterfassung um die Rohrleitung und die Schweißnaht bewegt. Mit besonderem Vorteil wird vorgeschlagen, wenigstens einen Radialmanipulator vorzusehen.

In erfindungsgemäßer Weise erfolgt die Positionierung von Strahlenquelle zu Digitalkamera rechnergestützt unter Verwendung eines positionierbaren Manipulators.

Gemäß einem weiteren vorteilhaften Vorschlag der Erfindung werden die Strahlenquelle und Kamera zeitlich versetzt nacheinander manipuliert, wobei die Meßwerterfassung während der Stillstandszeit des Manipulatorsystems erfolgt.

Die gesamte Materialprüfungsanalyse kann rechnergestützt erfolgen, da durch geeignete Programme die unterschiedlichen Materialdichten vom Rechner analysiert werden können. Durch Verändern der relativen Position lassen sich sehr exakte Tiefenanalysen und dreidimensionale Positionierungsangaben herleiten. Zur Prüfung eines Rohres wird beispielsweise eine 360° Prüfung durchgeführt, wobei der Strahlengang im wesentlichen senkrecht zur Rohrachse verläuft, und es werden zwei weitere Prüfungen durchgeführt, wobei der Strahlengang die Rohrachse in jeweils einem anderen Winkel schneidet. Durch diese Prüfungen lassen sich Inhomogenitäten mit einer sehr hohen Auffindwahrscheinlichkeit erfassen und hinsichtlich Lage und Form exakt darstellen.

Die Darstellungen können auf Monitoren, gedruckten BiJdern, Fotos und dergleichen erfolgen.

Durch die Erfindung werden eine große Zahl von Vorteilen erreicht. Insbesondere wird die überaus komplexe Prüfanlage im Anlagenbereich durch die Verwendung des mobilen Manipulatorsystems einsetzbar. Durch die Möglichkeit der Ausblendung der Strahlung kann der Kontrollberich verringert und dem Strahlenschutz genüge getan werden. Durch Einsatz eines Blendensystems vor der Detektorzelle werden die Erfassungsverzerrung und die Umgebungsstreuung reduziert. Insbesondere wird die Streustrahlung aufgrund einer Medienfüllung eines Rohres erheblich reduziert, so daß auch gefüllte Rohre mit der Erfindung besser geprüft werden können. Hierin ist ein besonderer Vorteil der vorliegenden Erfindung zu sehen. Ein weiterer Vorteil besteht darin, daß auch zum Strahlengang ungünstig liegende Risse mit hoher Auffindwahrscheinlichkeit erfaßt werden.

Weitere Vorteile und Merkmale der Erfindung ergeben sich aus der folgenden Beschreibung anhand der Figuren. Dabei zeigen:

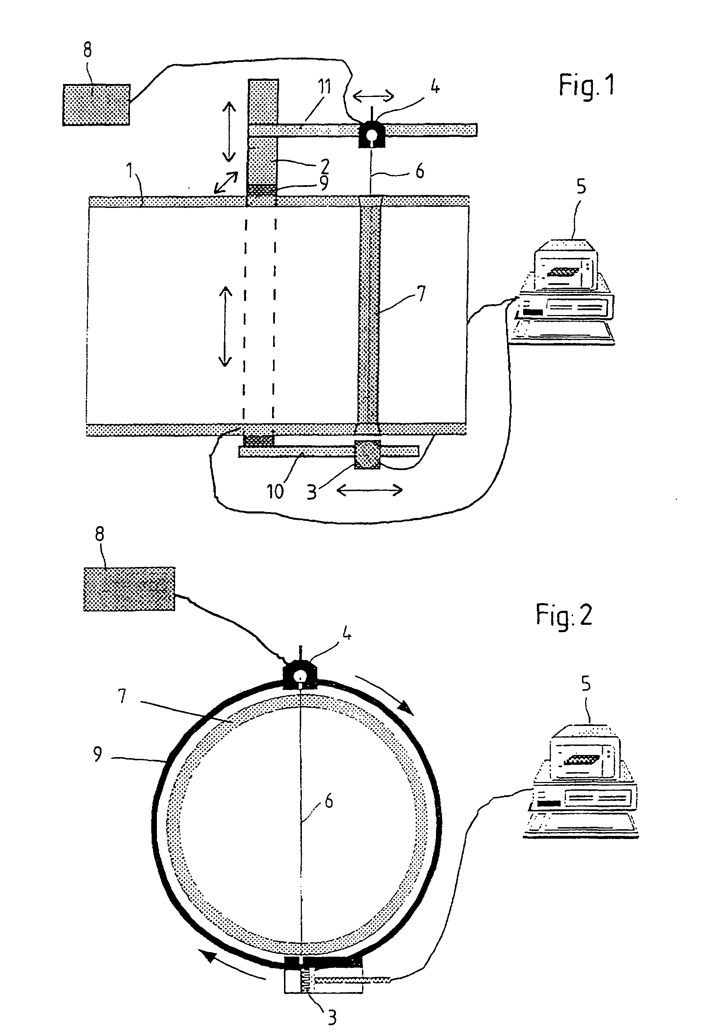

- Fig. 1: eine teilgeschnittene Darstellung eines Prüfaufbaus an einem Rohr gemäß einem Ausführungsbeispiel der Erfindung;
- Fig. 2: eine Ansicht des Aufbaus gemäß Fig. 1 in Rohrlängsrichtung und

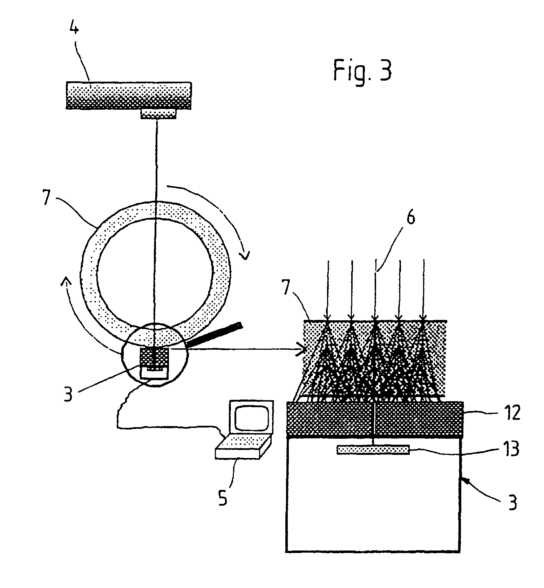

- Fig. 3: eine Detaildarstellung der Detektoreinheit.

Die Vorrichtung zur Durchstrahlungsprüfung von Schweißverbindungen besteht aus einer Strahlenquelle (Röntgenröhre oder Gamma-Strahler) einem Manipulationssystem und einer Zeilenkamera mit einem speziellen Kollimator. Ein Computer steuert das Manipulationssystem und die Kamera und gestattet eine Datenerfassung der ortsabhängigen Strahlendosiswerte, die einer vorgegebenen Position von Strahlenquelle, Zeilenkamera und Schweißnaht der Rohrleitung entsprechen. Die Kamera besteht aus einem spaltförmigen Kollimator hinter dem sich ein Nachweissystem befindet, daß aus mindestens 1.100 Detektoren besteht, die es gestatten, die Meßwerte entlang der Spaltöffnung gleichzeitig zu messen. Zur Erprobung wurde eine Zeilenkamera 3 verwendet, die aus einem Wolframkollimator 12 mit ca. 100µm Spaltbreite und 10 mm Dicke besteht, hinter dem über einen Leuchtschirm 13 die Röntgenoder Gamma-Strahlung in sichtbares Licht umgewandelt wird und über eine Photodiodenzeile von 2048 Elementen gleichzeitig gemessen wird. Die Spaltbreite beträgt 100 mm und der effektive Photodiodenabstand 50 µm. Das Manipulationssystem 2 besteht aus einem Zahnkranz 9, der um die Rohrleitung gespannt wird. Auf diesem Zahnkranz 9 befindet sich ein Längsmanipulator 10 an den die Kamera 3 montiert ist und ein zweiter Längsmanipulator 11 an den die Strahlenquelle 4 montiert ist. Durch eine verstellbare Halterung der Strahlenquelle 4 oder des Manipulators 2 der Strahlenquelle 4 kann der Abstand Strahlenquelle-Kamera eingestellt werden. Kamera und Strahlenquelle sind drehbar gelagert, um eine optimale Justage zu erreichen. Mit dieser Vorrichtung ist es möglich, drei Arbeitsweisen einzustellen.
1. Standardscan: Strahlenquelle und Zeilenkamera werden derart justiert, daß die möglichst vorkollimierte Strahlung durch den Spaltkollimator 12 auf die Detektoren fällt und der zentrale Strahl 6, der Strahlenquelle und Spaltmittelpunkt verbindet, immer durch den gleichen Punkt der Rohrlängsachse verläuft, der auch Mittelpunkt der kreisförmigen Schweißnaht sein sollte (bei Rundschweißnähten). Der Spalt des Kollimators wird senkrecht zur Schweißnaht und bei Rundschweißnähten immer parallel zur Rohrachse ausgerichtet. Durch Drehung des Systems Kamera-Strahlenquelle mit Hilfe des motorgesteuerten Manipulators 9 wird die Schweißnaht Zeile um Zeile durchstrahlt. Mit Hilfe des Computers werden die Meßwerte in ein Graustufenoder Farbbild ähnlich der Abbildung mit Röntgenfilmen umgewandelt, so daß diese Bilder durch einen Operator ausgewertet werden können. Aufgrund der Filterung der Streustrahlung durch den Kollimator führt diese Anordnung zu einer Kontrastverbesserung der Graustufenbilder im Gegensatz zu Röntgenfilmaufnahmen und allen bekannten Vorrichtungen mit Flächendetektoren bei der Durchstrahlung von Rohrleitungen 1 mit hohen Wanddicken oder von gefüllten Rohrleitungen.
   Durch die parallele Detektion mit 2048 Detektoren wird ein Signal-Rausch-Gewinn von 45 gegenüber einer radiometrischen Scanvorrichtung erhalten, die mit einem einzelnen Detektor arbeitet. Die Kamera sollte eine Detective Quantum Efficiency (DQE) von über 50% im verwendeten Wanddickenbereich aufweisen um den entsprechenden Meßzeitgewinn auch nutzen zu können. Darüber hinaus ist es wichtig für die Inspektion von Schweißnähten eine Ortsauflösung von besser 200 µm zu gewährleisten, um sicherheitsrelevante Inhomogenitäten aufzufinden.
2. Translationslaminographiescan: Zur Tiefenlagenbewertung von voluminösen und flächenhaften Inhomogenitäten sowie zur besseren Auffindung von flächenhaften Inhomogenitäten ist es sinnvoll, entweder mehrere Scans zu fahren, bei denen jeweils die Position der Strahlenquelle 4 entlang des Manipulators 11 versetzt wurde oder mehrere Positionen entlang des Manipulators 11 bei stehendem Rotationsmanipulator 9 zu vermessen und diese Messungen dann bei schrittweiser Bewegung des Rotationsmanipulators 9 zu wiederholen. Diese Arbeitsweise führt zu mehreren Durchstrahlungsaufnahmen bei jeweils unterschiedlichem Winkel der Strahlrichtung zur Symmetrieebene der Rundschweißnaht 7. Die eingestellten Grenzwinkel (max./min. Winkel) bestimmen hierbei den Vorzugswinkelbereich flächiger Inhomogenitäten, die mit hohem Kontrast nachgewiesen werden können. Die beschriebene Verfahrensweise ist optimal für die Prüfung auf flächige Inhomogenitäten in Schweißnahtlängsrichtung. Mittels Tomosynthese wird aus einzelnen Messungen dann die 3-dimensionale Verteilung rekonstruiert. Soll empfindlich für flächige Inhomogenitäten quer zur Schweißnaht geprüft werden, wird die Position der Strahlenquelle nicht in Längsrichtung des Manipulators 11 verschoben, sondern es wird die Strahlenquelle oder die Kamera oder es werden beide derartig auf dem runden Manipulator 9 versetzt positioniert, daß die Messungen bei verschiedenen Winkeln zur kameraseitigen Rohroberfläche innerhalb der Schnittfläche von Schweißnaht und Rohr erfolgen (Prescan und Postscan). Hierbei ist der Kollimator jeweils in Richtung der Strahlenquelle zu drehen.
3. Rotationslaminographiescan: Sollen alle voluminösen und flächigen Inhomogenitäten innerhalb eines Prüfbereiches gefunden werden, ist es erforderlich, eine Kombination aus allen beiden Varianten von 2. zu realisieren. Das heißt, es ist sowohl mit versetzter Röhre auf dem Manipulator 11 als auch mit Pre- und Postscan auf dem Manipulator 9 zu arbeiten. Es können alle flächigen Inhomogenitäten mit Orientierungen innerhalb des Rotationskegels, der durch den Kreissattel und den Kollimatormittelpunkt gebildet wird, mit hohem Kontrast gemessen werden.

### Bezugszeichenliste

- 1: Rohr
- 2: Längsmanipulator (radial)
- 3: Zeilenkamera
- 4: Strahlenquelle
- 5: Computer
- 6: Zentralstrahl
- 7: Rundschweißnaht
- 8: Steuergerät
- 9: Zahnkranz
- 10: Längsmanipulator
- 11: Längsmanipulator
- 12: Wolframkollimator
- 13: Detektoreinheit

## Patentansprüche

1. Verfahren zur Durchführung von Durchstrahlungsprüfungen an Werkstücken (1) zur Bestimmung von Form und Lage von Materialinhomogenitäten mit einer aus einer Detektionseinheit (3) und einer Strahlenquelle (4) bestehenden Vorrichtung, wobei auf einer Seite des zu prüfenden Bereichs (7) die Strahlenquelle (4) und auf einer gegenüberliegenden Seite die Detektionseinheit (3) angeordnet wird; so daß von der Strahlenquelle (4) ausgehende Strahlen durch den zu prüfenden Bereich des Werkstücks (1) hindurch auf die Detektionseinheit (3) gerichtet sind,
**dadurch gekennzeichnet, daß** eine Schienenbaugruppe (9) mit entlang der Schienenbaugruppe (9) verfahrbaren Trägereinheiten für die Strahlenquelle (4) und die Detektionseinheit (3) mit Manipulatoren (2, 10, 11) für Abstand und Winkel am Werkstück (1) montiert wird, wobei die Detektionseinheit (3) aus einer digitalen Kamera mit mindestens 1.100 für eine gleichzeitige Messung parallel angeschlossenen, eine oder mehrere Zeilen bildenden Sensoren (12, 13) besteht und von der Kamera elektrische Signale erzeugt werden, die rechnergestützt in vorgegebenen Zeitintervallen in Grau- beziehungsweise Farbdichtwerte zur Bildung von Strahlungsdichteprofilen umgewandelt und rechnergestützt aus den Strahlungsdichteprofilen Bilder berechnet werden und wobei die Strahlenquelle (4) und die Kamera mittels besagter Manipulatoren (2; 10, 11) hinsichtlich Abstand und Winkel relativ zueinander rechnergestützt eingestellt werden und synchron entlang einer Bewegungsbahn relativ zum zu prüfenden Bereich (7) verfahren werden.

2. Verfahren nach Anspruch 1, **dadurch gekennzeichnet, daß** eine dreidimensionale Rekonstruktion unter Berücksichtigung der jeweiligen Abstände und Winkel von digitaler Strahlenkamera (3) und Strahlenquelle (4) erfolgt.

3. Verfahren nach Anspruch 1 oder 2, **dadurch gekennzeichnet, daß** als Strahlenquelle (4) eine Röntgenröhre verwendet wird.

4. Verfahren nach einem der vorhergehenden Ansprüche, **dadurch gekennzeichnet, daß** als digitale Kamera (3) eine Photodioden-Zeilenkamera verwendet wird.

5. Verfahren nach Anspruch 4, **dadurch gekennzeichnet, daß** die Photodioden-Zeilenkamera (3) mit einer Pixelanzahl von mindestens 1.100 x 1, einer Pixelbreite von maximal 100 µm und einem maximalen Pixelabstand von 100 µm verwendet wird.

6. Verfahren nach einem der vorhergehenden Ansprüche, **dadurch gekennzeichnet, daß** die Strahlen der digitalen Kamera (3) über ein Blendensystem zugeführt werden.

7. Verfahren nach einem der vorhergehenden Ansprüche, **dadurch gekennzeichnet, daß** die Auswertung der Strahlungsdichteprofile unter Anwendung eines Verfahrens der Computer-Tomosynthese durchgeführt wird.

8. Vorrichtung zur Durchführung eines Verfahrens zur Durchführung von Durchstrahlungsprüfungen an Werkstücken (1) zur Bestimmung von Form und Lage von Materialinhomoginitäten nach wenigstens einem der Ansprüche 1 bis 7 mit einer Strahlenquelle (4) und einer digitalen Kamera (3), **gekennzeichnet durch** eine mobil am zu prüfenden Werkstück (1) montierbare Schienenbaugruppe (9) mit entlang der Schienenbaugruppe (9) verfahrbaren Trägereinheiten für die Strahlenquelle (4) und die digitale Kamera (3), mit Manipulatoren (2, 10, 11) für Abstand und Winkel und wenigstens einer Rechnereinheit (5) zur Steuerung der Trägereinheiten und der Manipulatoren (2, 10, 11) und zur Umwandlung der von der digitalen Kamera (3) aufgrund der empfangenen Strahlung erzeugten elektrischen Signale in Grau- beziehungsweise Farbdichtewerte zur Bildung von Strahlungsdichteprofilen und zur rechnergestützten Berechnung von Bildern aus den Strahlungsdichteprofilen.

9. Vorrichtung nach Anspruch 8, **dadurch gekennzeichnet, daß** eine dreidimensionale Rekonstruktion aus den Strahlungsdichteprofilen unter Berücksichtigung der jeweiligen Abstände und Winkel von digitaler Kamera (3) und Strahlenquelle (4) erfolgt.

## Claims

1. Method of carrying out irradiation tests on workpieces (1) in order to determine the form and position of inhomogeneities of material using an apparatus comprising a detector unit (3) and a radiation source (4), wherein the radiation source (4) is disposed on one side of the region (7) to be tested and the detector unit (3) is disposed on an opposing side so that radiation emanating from the radiation source (4) is directed through the region of the workpiece (1) to be tested onto the detector unit (3), **characterised in that** a rail assembly (9) with support units which are movable along the rail assembly (9) for the radiation source (4) and the detector unit (3) with manipulators (2, 10, 11) for distance and angle is mounted on the workpiece (1), wherein the detector unit (3) comprises a digital camera with at least 1,100 sensors (12, 13) which are connected in parallel for simultaneous measurement and form one or more lines, and the camera generates electrical signals which are converted with the aid of a computer at predetermined time intervals into grey or colour density values in order to form radiation density profiles and with the aid of a computer images are computed from the radiation density profiles, and wherein with the aid of a computer the radiation source (4) and the camera are adjusted with regard to spacing and angle relative to one another by means of the said manipulators (2, 10, 11) and are moved synchronously along a movement path relative to the region (7) to be tested.

2. Method as claimed in Claim 1, **characterised in that** a three-dimensional reconstruction is effected taking account of the respective spacings and angles of the digital camera (3) and the radiation source (4).

3. Method as claimed in either Claim 1 or Claim 2, **characterised in that** an X-ray tube is used as the radiation source (4).

4. Method as claimed in any one of the preceding claims, **characterised in that** a photodiode line camera is used as the digital camera (3).

5. Method as claimed in Claim 4, **characterised in that** the photodiode line camera (3) is used with a pixel count of at least 1,100 x 1, a maximum pixel width of 100 µm and a maximum pixel spacing of 100 µm.

6. Method as claimed in any one of the preceding claims, **characterised in that** the radiation is delivered to the digital camera (3) by way of a diaphragm system.

7. Method as claimed in any one of the preceding claims, **characterised in that** the evaluation of the radiation density profiles is carried out using a method of computer tomosysnthesis.

8. Apparatus for carrying out a method of carrying out irradiation tests on workpieces (1) in order to determine the form and position of inhomogeneities of material as claimed in at least one of Claims 1 to 7 with a radiation source (4) and a digital camera (3), **characterised by** a rail assembly (9) which can be movably mounted on the workpiece (1) to be tested with support units which are movable along the rail assembly (9) for the radiation source (4) and the digital camera (3), with manipulators (2, 10, 11) for distance and angle and at least one computer unit (5) for controlling the support units and the manipulators (2, 10, 11) and for converting the electrical signals generated by the digital camera (3) on the basis of the received radiation into grey or colour density values in order to form radiation density profiles and for computer-aided computation of images from the radiation density profiles.

9. Apparatus as claimed in Claim 8, **characterised in that** a three-dimensional reconstruction is effected from the radiation density profiles taking account of the respective spacings and angles of the digital camera (3) and the radiation source (4).

## Revendications

1. Procédé de mise en oeuvre de contrôles radiographiques sur des pièces (1) pour la détermination de la forme et de la position en profondeur d'inhomogénéités du matériau avec un dispositif constitué d'une unité de détection (3) et d'une source de rayonnement (4), la source de rayonnement (4) étant placée d'un côté de la zone à contrôler (7) et l'unité de détection (3) du côté opposé de telle sorte que des rayons partant de la source de rayonnement (4) sont dirigés sur l'unité de détection (3) en passant à travers la zone à contrôler de la pièce (1),
**caractérisé en ce qu'**un module sur rails (9) avec des systèmes porteurs déplaçables le long du module sur rails (9) et destinés à la source de rayonnement (4) et à l'unité de détection (3) avec des manipulateurs (2, 10, 11) pour la distance et pour l'angle est monté sur la pièce (1), l'unité de détection (3) étant constituée d'une caméra numérique avec au moins 1100 capteurs (12, 13) raccordés en parallèle pour une mesure simultanée et formant une ou plusieurs lignes et des signaux électriques étant produits par la caméra, ces signaux étant transformés par ordinateur en valeurs de gris ou de densités de couleurs dans des intervalles de temps prédéterminés pour la formation de profils de densité de rayonnement et des images étant calculées par ordinateur à partir des profils de densité de rayonnement et lesdits manipulateurs (2, 10, 11) réglant par ordinateur la source de rayonnement (4) et la caméra en distance et angle l'une par rapport à l'autre et les déplaçant de manière synchrone le long d'une trajectoire par rapport à la zone à contrôler (7).

2. Procédé selon la revendication 1, **caractérisé en ce qu'**on effectue une reconstruction tridimensionnelle en tenant compte des distances et angles respectifs entre caméra numérique (3) et source de rayonnement (4).

3. Procédé selon la revendication 1 ou 2, **caractérisé en ce qu'**on utilise un tube à rayons X comme source de rayonnement (4).

4. Procédé selon l'une des revendications précédentes, **caractérisé en ce qu'**on utilise une caméra de balayage à photodiodes comme caméra numérique (3).

5. Procédé selon la revendication 4, **caractérisé en ce qu'**on utilise la caméra de balayage à photodiodes (3) avec un nombre de pixels de 1100 x 1 au minimum, avec une largeur de pixel de 100 µm au maximum et avec une distance maximale entre pixels de 100 µm.

6. Procédé selon l'une des revendications précédentes, **caractérisé en ce que** les rayons sont envoyés à la caméra numérique (3) par l'intermédiaire d'un système formant diaphragme.

7. Procédé selon l'une des revendications précédentes, **caractérisé en ce qu'**on évalue les profils de densité de rayonnement en appliquant un procédé de synthèse de tomographie assisté par ordinateur.

8. Dispositif pour la mise en oeuvre d'un procédé de mise en oeuvre de contrôles radiographiques sur des pièces (1) pour la détermination de la forme et de la position en profondeur d'inhomogénéités du matériau selon au moins l'une des revendications 1 à 7 avec une source de rayonnement (4) et avec une caméra numérique (3), **caractérisé par** un module sur rails (9) pouvant être monté mobile sur la pièce à contrôler (1) avec des systèmes porteurs déplaçables le long du module sur rails (9) et destinés à la source de rayonnement (4) et à la caméra numérique (3), avec des manipulateurs (2, 10, 11) pour la distance et pour l'angle et avec au moins une unité formant ordinateur (5) pour la commande des systèmes porteurs et des manipulateurs (2, 10, 11) et pour la transformation des signaux électriques produits par la caméra numérique (3) suite au rayonnement reçu en valeurs de gris ou de densités de couleurs pour la formation de profils de densité de rayonnement et pour le calcul assisté par ordinateur d'images à partir des profils de densité de rayonnement.

9. Dispositif selon la revendication 8, **caractérisé en ce qu'**une reconstruction tridimensionnelle à partir des profils de densité de rayonnement est effectuée en tenant compte des distances et angles respectifs entre caméra numérique (3) et source de rayonnement (4).
